# EUROPEAN PATENT APPLICATION

(11) **EP 1 710 469 A2**
(43) Date of publication of application: **11.10.2006**
(21) Application number: 06112343.6
(22) Date of filing: 07.04.2006
(51) Int. Cl.: F16G 1/28

(54) **Closed-ring transmission belt and method to produce it**

(30) Priority: 08.04.2005 IT UD20050055
(71) Applicant: ELATECH SRL, I-24012 Brembilla BG (IT)
(72) Inventor: Pesenti, Gianfranco, 24012, Brembilla (BG) (IT)
(74) Representative: Petraz, Gilberto Luigi

(57) **Abstract**

Closed-ring transmission belt (10) comprising a base body (11) having an inner part (12) provided with a plurality of teeth (15) and a plane outer part (13), the base body (11) being reinforced internally with a spiral coil made with a continuous wire (17) of non-extendible material and disposed between the inner part (12) and the outer part (13). The parts (12, 13) are made of the same or similar material, and are joined together so as to form a single body, in which the coil is completely incorporated.

## Description

### FIELD OF THE INVENTION

The present invention concerns a closed-ring belt, of the type usable for the transmission of power between mechanical members and reinforced internally with a coil of non-extendible wire. The invention also concerns the method to make said belt.

### BACKGROUND OF THE INVENTION

Closed-ring transmission belts normally comprise a base body made of elastomer material, for example polyurethane, reinforced by a coil of non-extendible wire which is inserted into said material between an inner part of the body of the belt, subject to compression and able to contact the mechanical movement members, and an outer part, subject to being tensed.

The inner part is also provided with a plurality of teeth having shape, size and pitch compatible with those of corresponding hollows made in mechanical movement members on which the belt is used.

The US patent US-4,083,838 teaches to make closed-ring belts winding in parallel spirals, between a drum and a tensioning roller, a pre-formed strip of belt already provided inside with a reinforcement wire, and having a width equal to a fraction of the overall width of the belt to be made. The different spirals of the pre-formed strip are then welded on the flanks.

This latter method, however, is long and laborious and does not allow to obtain a sufficient repeatability of the product. Another disadvantage is that the distance between two adjacent wires is fixed a priori by the width of the strip. Moreover, the article thus produced includes some zones in which the reinforcement wire is exposed to atmospheric agents.

One purpose of the present invention is to achieve a closed-ring transmission belt which does not have jointed parts and whose coil of non-extendible wire is not exposed to external atmospheric agents.

Another purpose of the invention is to achieve a belt having the base body made of plastic material which, on the one hand, can resist the shearing forces that are generated on contact with the mechanical movement members and which, on the other hand, is flexible enough to allow an effective tensioning so that the belt can also be used with small-size pulleys.

Another purpose is to perfect a method which allows to achieve a closed-ring transmission belt simply and economically, also allowing to save material compared with known methods.

The Applicant has devised, tested and embodied the present invention to overcome the shortcomings of the state of the art and to obtain these and other purposes and advantages.

### SUMMARY OF THE INVENTION

The present invention is set forth and characterized in the main claims, while the dependent claims describe other characteristics of the invention or variants to the main inventive idea.

In accordance with these purposes, a closed-ring transmission belt according to the present invention can be used to transmit power between mechanical members. The belt according to the invention comprises a base body having an inner part provided with a plurality of teeth and a substantially plane outer part. The base body is reinforced internally with at least a spiral coil made with a wire of substantially non-extendible material, for example metal or plastic, and disposed between the inner part and the outer part.

The belt is made according to a method according to the invention which comprises at least the steps listed hereafter.

In a first step, using a first elastomer material, a continuous strip is made, provided on one side with a plurality of teeth.

The length of the strip is equal to or greater than the development of the belt to be made, but it is also provided to use a strip with a length less than said inner development, which is then joined with other pieces of strip until an overall length is reached which is equal to said inner development.

In a second step, which can be performed without distinction before, after or simultaneous to the first step, a non-extendible wire is wound in adjacent spirals onto at least a tensioning cylinder and a drum, provided with a plurality of hollows having size, shape and pitch mating with those of the teeth, so as to define the coil. The diameters of the drum and the tensioning cylinder and the interaxis between them are chosen so that the coil has a development equal to the inner development of the belt to be made.

In a third step, the strip is cut to size so that its length is substantially equal to the inner development of the belt to be made. Subsequently, a first end of the strip is guided onto the drum so that the first teeth of said end engage with the corresponding hollows. This operation is performed while keeping the drum in rotation and the coil under tension between the drum and the tensioning cylinder. In this way, the strip advances, drawn by the drum, and positions itself between the coil and the lateral surface of the drum.

In a fourth step, the coil is covered, for example by extrusion, with a covering layer of a second elastomer material, defining the outer part of the base body of the belt, so that the outer part and the inner part define a single body.

Advantageously, the third and the fourth step are performed simultaneously and continuously, as the strip is gradually made to advance on the drum.

When the second end of the strip also comes into contact with the drum, it enters into contact with the first end and is joined to it by means of heat-welding, gluing, or in another known manner.

In this way, the method according to the invention allows to obtain a closed-ring belt, not jointed, starting advantageously from a continuous strip and hence open, and wherein the strip and the covering layer are joined together so as to form a single body. Given that the inner reinforcement wire is completely covered and incorporated into the body of the belt, defined by said two parts, the invention also allows to use wires of non-inoxidizable material, since they are not exposed to the air and hence to the action of oxidation.

According to another characteristic of the invention, the material of which the inner part is made and the material of which the outer part is made are the same, or similar, and comprise, for example, polyurethane or polyamide.

According to an advantageous solution of the invention, the material of which the inner part is made has a greater hardness than that of the material of which the outer part is made, on the one hand allowing greater resistance to the shearing forces during contact with the mechanical movement members and, on the other hand, a greater flexibility of the outer part.

Having fixed the diameters of the drum and the roller, the invention allows to make belts having a development of any length whatsoever, even several tens of meters, varying the interaxis between the drum and the tensioning roller. This operation is carried out by means of a movement device and advantageously controlled electronically. In this way, given the same inner development, the invention allows to achieve belts having greater stability of size, and hence allows a greater repeatability of the product compared with known methods.

### BRIEF DESCRIPTION OF THE DRAWINGS

These and other characteristics of the present invention will become apparent from the following description of a preferential form of embodiment, given as a non-restrictive example with reference to the attached drawings wherein:
- fig. 1 is a perspective view, partly sectioned, of a transmission belt according to the present invention;
- fig. 2 is a perspective view, partly sectioned, of a strip used to make the belt in fig. 1;
- fig. 3 is a lateral view of an apparatus used to make the belt in fig. 1, in a first operating condition;
- fig. 4 is a view of a detail of the apparatus shown in fig. 3;
- fig. 5 is a lateral view of the apparatus in fig. 3, in a second operating condition;
- fig. 6 is a detail of the apparatus in fig. 5.

### DETAILED DESCRIPTION OF A PREFERENTIAL FORM OF EMBODIMENT

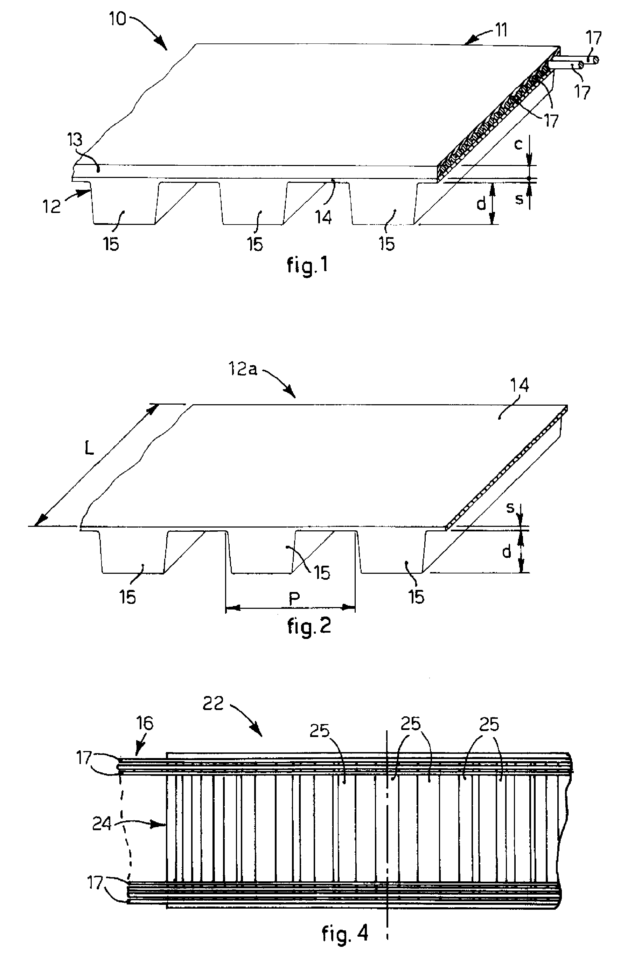

With reference to fig. 1, a belt 10 according to the present invention is of the closed-ring type and is used for the mechanical transmission of power.

The belt 10 comprises a base body 11 having an inner part 12 provided with a plurality of teeth 15 and a substantially plane outer part 13, and reinforced internally with at least a coil 16 made with a continuous wire 17 of substantially non-extendible material and disposed between the inner part 12 and the outer part 13.

The belt 10 is made according to a method which comprises the steps described hereafter.

A first step provides to make a pre-formed strip 12a (fig. 2) of a first plastic material, for example polyurethane, having a base layer 14 with a thickness s of about 0.1 - 2.0 mm, from which the teeth 15 develop equally separated according to a pitch P, and have a thickness d of about 2-10 mm. According to one solution of the invention, the base layer 14 comprises a reinforcement mesh, for example made of fabric.

The strip 12a is cut to size and has a length equal to the expected development of the belt 10. To be more exact, the length LU of the strip 12a is equal to the product of the number n of teeth 15 and the pitch P of the teeth, that is, LU = n·P.

The strip 12a has a width L equal to the expected width of the belt 10, but it is provided that the width L of the strip 12a is greater than that provided for the belt 10, for example double, allowing to achieve two belts 10 of equal width of about L/2.

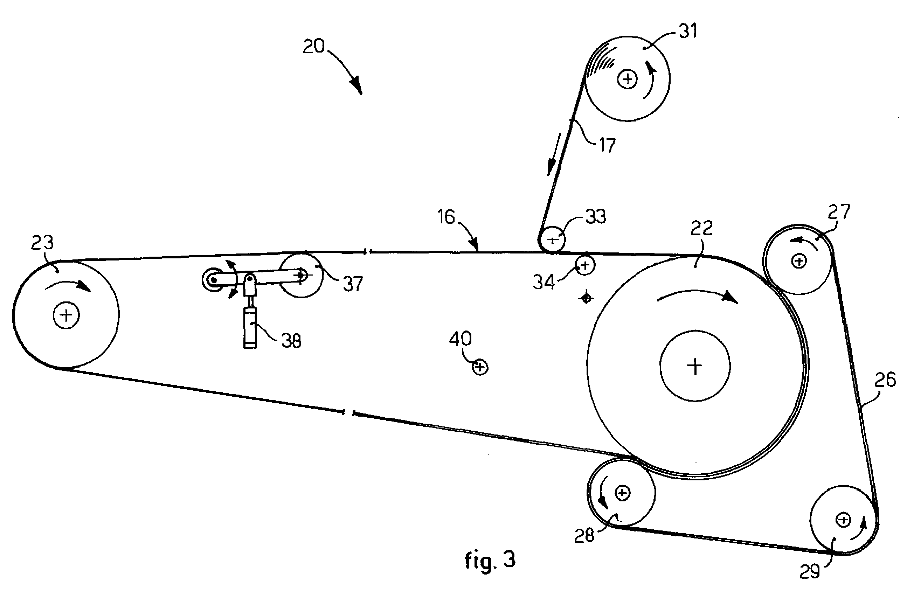

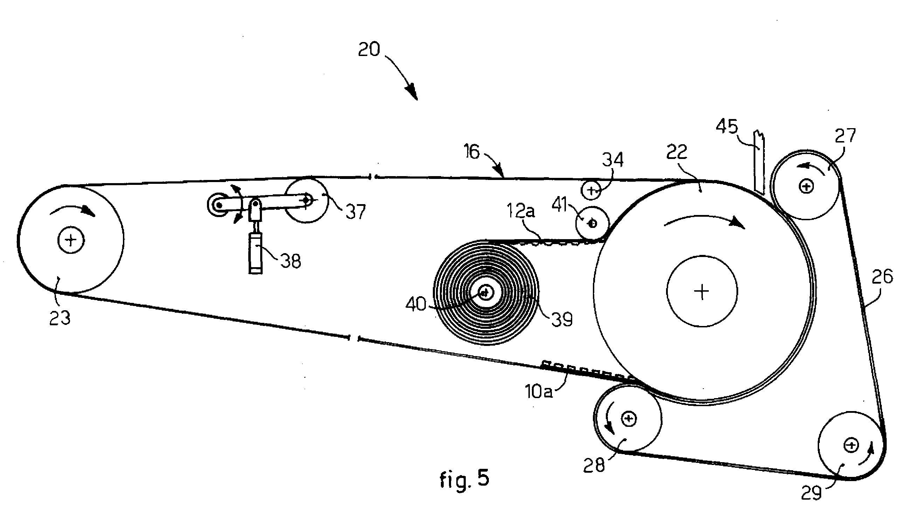

The method according to the invention also comprises another two steps which are performed, for example, by means of an apparatus 20 (figs. 3 and 5), comprising a drum 22 and a tensioning cylinder 23. In this case, the drum 22 is connected mechanically to a motor, while the tensioning cylinder 23 is idle; both comprise, on a relative lateral surface, a plurality of hollows having size, shape and pitch mating with those of the teeth 15 of the strip 12a. To be more exact, fig. 4 shows, with the reference number 24, the lateral surface of the drum 22.

In this case the teeth 15, and hence the hollows 25, are disposed parallel to each other, but they can also be disposed in another way, for example as an alternating W.

The apparatus 20 also comprises an endless strip, in this case a metal foil 26 which is held thrust against a part of the lateral surface 24 of the drum 22 by means of two pressure rollers, respectively first 27 and second 28, and a tensioning roller 29.

In a second step of the method, the non-extendible wire 17, for example made of steel with a diameter of about 0.3-2.0 mm, is wound from one or more reels 31 and is guided by means of a guide 33 onto a wire-guiding cylinder 34 towards the lateral surface 24 of the drum 22 in contact with the metal foil 26, so as then to be guided towards the tensioning cylinder 23 and from here again towards the wire-guiding cylinder 34 and the drum 22.

The wire 17 is thus wound between the drum 22 and the tensioning cylinder 23, defining the coil 16 having a width slightly less than the width L of the strip 12a, and wherein two adjacent spirals of wire 17 are spaced from each other by a desired quantity, for example some tenths of a millimeter, or can be right up against each other.

The wire-guiding cylinder 34 comprises on its lateral surface a determinate number of circular seatings corresponding to the number of times that the wire 17 is wound.

Between the tensioning cylinder 23 and the wire-guiding cylinder 34 there is a wire-tensing cylinder 37 which is driven by a pneumatic jack 38 and which has the function of keeping the coil 16 under tension, increasing the development thereof by a determinate quantity.

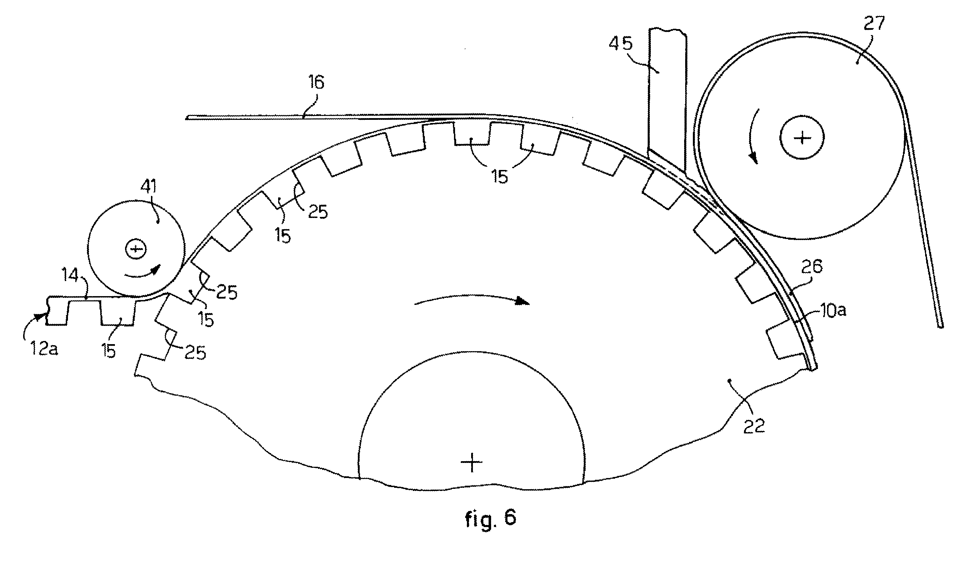

In a third step of the method (fig. 5), the strip 12a, wound in a reel 39 disposed on a hub 40, is guided by means of a guide cylinder 41 towards the drum 22, so that the first tooth 15 (fig. 6) disposed in correspondence with a first end of the strip 12a, engages with a corresponding hollow 25 of the drum 22. The drum 22 rotates, moved by the motor, and consequently the strip 12a advances, so that the teeth 15 after the first tooth gradually engage with the corresponding hollows 25, so as to reach the coil 16 and position themselves between the latter and the lateral surface 24 of the drum 22.

In correspondence with the strip 12a, the coil 16 is distanced towards the outside of the drum 22 and of the tensioning cylinder 23, by a quantity equal to the thickness of the base layer 14 of the strip 12a, since the bulk of the teeth 15 is contained entirely in the corresponding hollows 25. In order to take this displacement into account, the wire-tensing cylinder 37 automatically reduces the tension on the coil 16. The presence of the reinforcement mesh in the base layer 14 also ensures that the coil 16 does not penetrate into the layer 14 itself.

The apparatus 20 also comprises an extruder 45 able to extrude, in fluid form and at a temperature of about 180-200°C, a covering layer of a second elastomer material, for example polyurethane or polyamide, which is channeled between the base layer 14 of the strip 12a and the metal foil 26, defining the outer part 13 of the base body 11. The outer part 13 has a thickness c of about 1-5 mm (fig. 1).

In this way, a portion 10a of belt emerges from the second pressure roller 28 (figs. 5 and 6) comprising the strip 12a in a single body, which defines the inner part 12 of the base body 11, the spirals of wire 17 of the coil 16 and the covering layer, which defines the outer part 13 of the base body 11.

This step continues until the second end of the strip 12a comes into contact with the drum 22. At this point the whole strip 12a has been unwound from the reel 39 and the first end of the strip 12a is perfectly in contact with the second; extrusion continues until the second end has reached the extruder 45.

In this way, we obtain a closed-ring belt whose primitive development is defined by the axis of the coil 16.

To make belts 10 with different developments, with the diameters of the drum 22 and the tensioning cylinder 23 remaining the same, the apparatus 20 comprises a movement device, not shown here, associated with the drum 22 and/or the tensioning cylinder 23, which has the function of varying the interaxis between the latter two. The apparatus 20 also comprises a command and control unit which drives the movement device in order to vary the interaxis and to obtain belts 10 having the desired development. Since the control is numerical, the apparatus 20 allows a great repeatability of the product.

It is clear that modifications and/or additions of parts and/or steps may be made to the belt 10 and method as described heretofore, without departing from the field and scope of the present invention.

It is also clear that, although the present invention has been described with reference to some specific examples, a person of skill in the art shall certainly be able to achieve many other equivalent forms of closed-ring transmission belt and methods to achieve them, having the characteristics as set forth in the claims and hence all coming within the field of protection defined thereby.

## Claims

1. Closed-ring transmission belt comprising a base body (11) having an inner part (12) provided with a plurality of teeth (15) and a substantially plane outer part (13), wherein said base body (11) is reinforced internally with at least a spiral coil (16) made with a continuous wire (17) of substantially non-extendible material and disposed between said inner part (12) and said outer part (13), **characterized in that** said inner part (12) and said outer part (13) are made of the same or similar materials, and are joined together so as to form a single body, in which said coil (16) is completely incorporated.

2. Belt as in claim 1, **characterized in that** said materials comprise polyurethane or polyamide.

3. Belt as in claim 1 or 2, **characterized in that** said inner part (12) has a greater hardness with respect to said outer part (13).

4. Belt as in claim 1, 2 or 3, **characterized in that** said inner part (12) comprises at least an inner reinforcement mesh.

5. Method to achieve a closed-ring transmission belt comprising a base body (11) having an inner part (12) provided with a plurality of teeth (15) and a substantially plane outer part (13), wherein said base body (11) is reinforced internally with at least a coil (16) made with a wire (17) of substantially non-extendible material and disposed between said inner part (12) and said outer part (13), **characterized in that** it comprises at least the following steps:
- a first step, during which a strip (12a) is made of a first elastomer material, provided on one side with said plurality of teeth (15);
- a second step, not necessarily performed in sequence with respect to said first step, during which said wire (17) is wound between at least a tensioning cylinder (23) and a rotary drum (22), provided with a plurality of hollows (25) having size, shape and pitch mating with those of said teeth (15), so as to define said coil (16);
- a third step, performed subsequently to said first and second step, during which said strip (12a) is cut to size so as to define the development of said belt (10), and to achieve said inner part (12), is positioned between said coil (16) and said rotary drum (22) engaging each tooth (15) in a corresponding hollow (25), and is made to advance by the rotation of said rotary drum (22), said coil (16) being kept under tension between said rotary drum (22) and said tensioning cylinder (23);
- a fourth step, during which said coil (16) is covered with a covering layer so as to define said outer part (13) of said base body (11) with a second elastomer material, said inner part (12) and said outer part (13) being joined together so as to form a single body, in which said coil (16) is completely incorporated.

6. Method as in claim 5, **characterized in that** said strip (12a) has a length substantially equal to or greater than an inner development of said belt (10) to be made.

7. Method as in claim 5, **characterized in that** said strip (12a) has a length less than an inner development of said belt (10) to be made and is joined to other pieces of strip (12a) in order to reach an overall length equal to said inner development of said belt (10).

8. Method as in claim 5, 6 or 7, **characterized in that** during said second step, said wire (17) is wound between said tensioning cylinder (23) and said rotary drum (22), so that said coil (16) has a development substantially equal to an inner development of said belt (10) to be made.

9. Method as in any claim from 5 to 8, **characterized in that** during said fourth step, said second material is extruded in a substantially fluid form onto said cut strip (12a) and onto said coil (16) by means of extrusion means (45).

10. Method as in any claim from 5 to 9, **characterized in that** the diameters of said rotary drum (22) and of said tensioning cylinder (23) and the interaxis between them define the inner development of said belt (10).

11. Method as in any claim from 5 to 10, **characterized in that** during said second step and said third step, the tension of said coil (16) is varied by means of tensioning means (37, 38) at least according to the presence or absence of said strip (12a) between said coil (16) and said rotary drum (22) and/or said tensioning cylinder (23).

12. Method as in any claim from 5 to 11, **characterized in that** said third and said fourth step are performed simultaneously.
